Europäisches Patentamt

**European Patent Office**

**Office européen des brevets**

(11) Numéro de publication: **0 060 792**
**A1**

## (12) DEMANDE DE BREVET EUROPEEN

(21) Numéro de dépôt: **82400483.2**

(22) Date de dépôt: **16.03.82**

(51) Int. Cl.³: **A 01 K 61/00**

(30) Priorité: **16.03.81  FR 8105368**

(43) Date de publication de la demande: **22.09.82**
**Bulletin 82/38**

(84) Etats contractants désignés: **GB IT SE**

(71) Demandeur: **René, François, INSTITUT SCIENTIFIQUE ET TECHNIQUES DES PECHES MARITIMES Pointe Fort, F-97231 Le Robert Martinique F.W.1 (FR)**

(72) Inventeur: **René, François, INSTITUT SCIENTIFIQUE ET TECHNIQUES DES PECHES MARITIMES Pointe Fort, F-97231 Le Robert Martinique F.W.1 (FR)**

(74) Mandataire: **Lecca, Jean et al, CABINET PLASSERAUD 84, rue d'Amsterdam, F-75009 Paris (FR)**

(54) **Cage d'élevage et/ou de stockage d'animaux aquatiques.**

(57)    L'invention concerne une cage d'élevage permettant d'élever et/ou de stocker les animaux aquatiques. La cage comprend un mât central rigide (1) sur lequel est enfilée et centrée une série d'anneaux (2a, 2b) reliés entre eux par des cordages (3); les anneaux extérieurs (2a) sont reliés par des cordages (4) aux embouts (5) situés aux extrémités du mât (1) qui constituent les points d'ancrage (6) de la cage. Cet ensemble (A), recouvert d'un filet (B), constitue une cage cylindrique à bouts coniques qui, en position d'élevage, est horizontale, une partie variable constamment emergée permettant le nettoyage automatique du filet par assèchement des épiphytes.

EP 0 060 792 A1

"Cage d'élevage et/ou de stockage d'animaux aquatiques"

La présente invention concerne un dispositif du type cage d'élevage et/ou de stockage d'animaux aquatiques adapté à des plans d'eau divers.

Dans les dispositifs connus de ce type, les cages, de formes diverses, sont :

- soit de conception simple et d'un coût de fabrication modéré, mais elles présentent dans ce cas un coût de fonctionnement élevé (car elles nécessitent un nettoyage périodique des mailles) et une résistance faible aux intempéries aquatiques;

- soit d'une conception plus élaborée (cages rotatives auto-décolmatantes) qui réduit le coût d'utilisation, mais leur sophistication en augmente considérablement le coût de fabrication, tout en restant de résistance moyenne et d'utilisation difficile en ce qui concerne les modifications de mailles au cours de l'élevage.

La cage ici proposée permet de combiner les avantages des cages rotatives auto-décolmatantes à ceux des cages de conception et de construction simples et peu onéreuses, l'ensemble étant particulièrement résistant aux intempéries aquatiques.

L'invention a pour objet une cage pour l'élevage ou le stockage d'animaux aquatiques comportant une structure définissant le volume de la cage dans l'espace aquatique et un filet ou grillage habillant la structure et elle est caractérisée en ce que ladite structure est constituée par un mât central rigide sur lequel est enfilée et centrée une série d'anneaux reliés entre eux par des cordages.

L'invention pourra, de toute façon, être bien comprise à l'aide du complément de description qui suit, ainsi que des dessins ci-annexés, lesquels complément et dessins sont, bien entendu, donnés surtout à titre d'indication.

La figure 1 représente la cage selon l'invention vue de face.

La figure 2 représente cette cage vue de profil.

Les figures 3 et 4 illustrent la cage de face pendant les opérations de pêche ou de tri.

Se référant aux dessins, on voit que la cage comporte :

- d'une part, une structure A qui définit le volume de la cage dans l'espace aquatique et qui confère à la cage ses qualités de résistance, de souplesse, de possibilité de pêche, de tri et de nettoyage; et

- d'autre part, un filet ou grillage B qui habille la structure.

La structure est constituée, conformément à l'invention, par un mât central rigide 1 sur lequel est enfilée et centrée une série d'anneaux 2a, 2b reliés entre eux par des cordages 3.

Les anneaux extrêmes 2a sont reliés par des cordages 4 sur des embouts 5 situés aux extrémités du mât 1 et qui constituent les points d'ancrage 6 de la cage.

L'ensemble est rigidifié par la mise en tension des cordages 3.

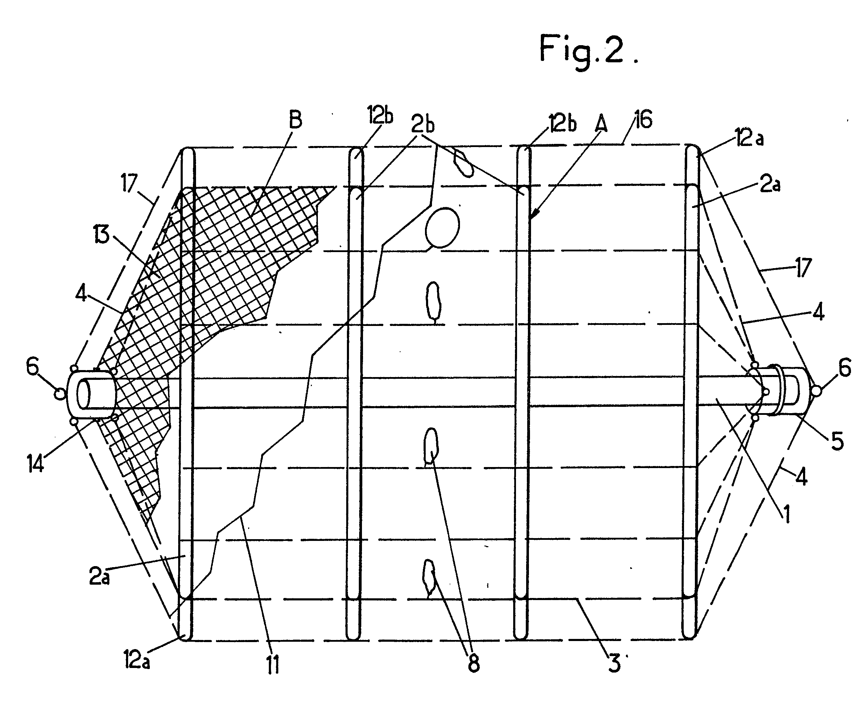

Le filet ou grillage B est représenté seulement partiellement sur la figure 2 pour bien laisser apercevoir la structure de la cage.

La cage est donc une cage cylindroconique dont la longueur est définie par la longueur du mât central 1 et le diamètre par le diamètre des anneaux 2a, 2b.

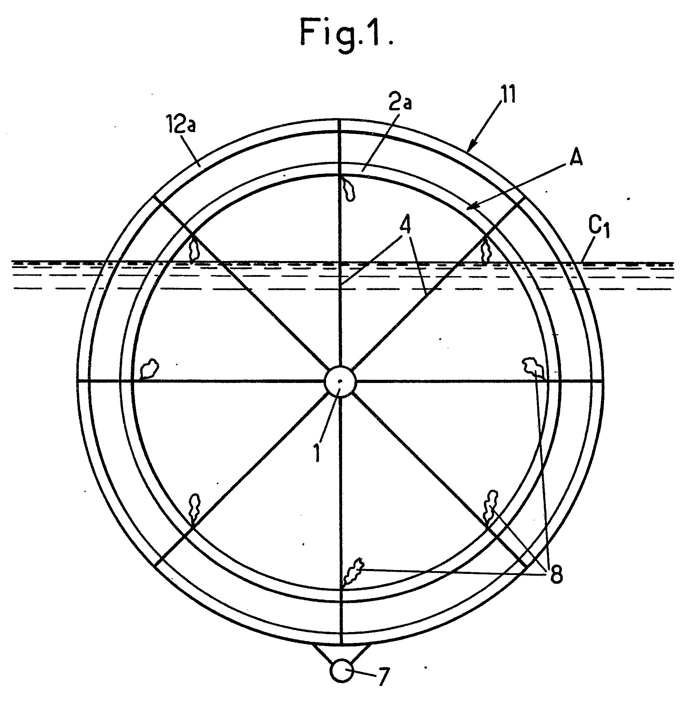

En position d'utilisation d'élevage, la cage a son mât horizontal 1 et ses anneaux 2a, 2b émergés sur une partie de leur diamètre (sur les figures 1, 3 et 4 on a représenté en $C_1$ et $C_2$ le niveau de la surface libre de l'eau). Cette position permet l'émersion d'une partie du filet B qui, durant cette phase, se nettoie des épiphytes qui s'y sont fixés durant son séjour aquatique (niveau $C_1$).

La rotation de la cage peut être réalisée soit manuellement par déplacement d'un lest ponctuel 7 (figure 1) fixé à la périphérie de la cage, soit automatiquement par gonflage différentiel de flotteurs 8 répartis judicieusement sur les parois du cylindre 3 ou des cônes latéraux 4 délimitant la structure de la cage.

La rotation régulière de la cage (1/8 de tour tous les 3 jours par exemple) assure une décolmatation régulière et efficace des mailles du filet ou grillage B.

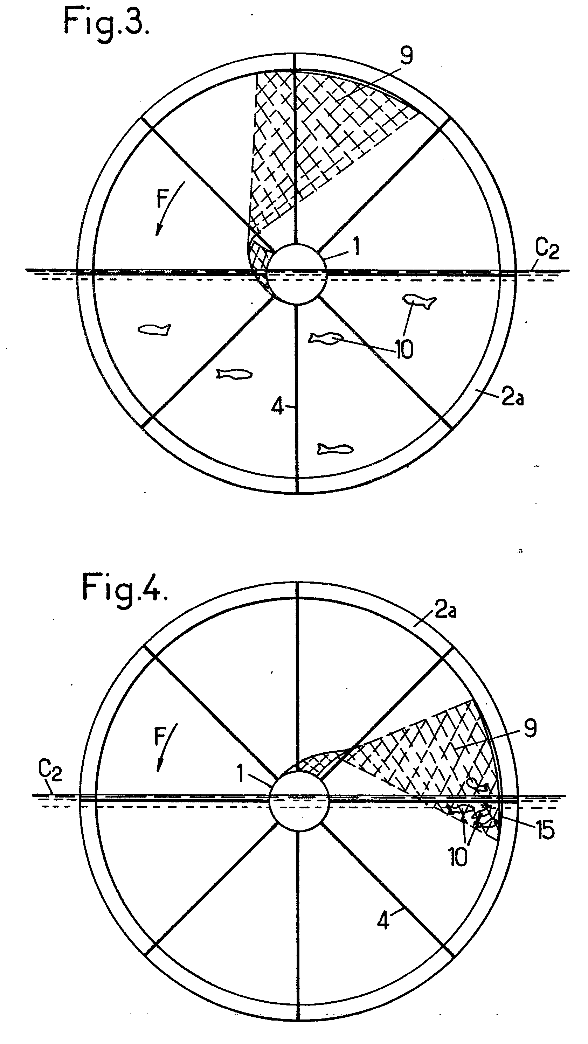

En position de pêche ou de tri (figures 3 et 4) la cage est placée toujours en position avec son mât 1 horizontal. Ce mât est alors amené en surface par déballastage des extrémités, le volume immergé de la cage n'étant plus qu'une moitié de cylindre (niveau de l'eau en $C_2$).

Un panneau de filet 9, disposé suivant un plan radial du cylindre, va, durant la rotation de la cage (effectuée pour la pêche ou le tri), balayer le volume immergé et rassembler dans un volume restreint les poissons désirés 10 (sur les figures 3 et 4 on a représenté par la flèche F le sens de rotation de la cage).

La suture du panneau de filet 9 sur la surface du cylindre étant effectuée suivant une ligne brisée en un endroit, les poissons sont nécessairement rassemblés en un point de la cage où on a prévu une ouverture pour permettre sa récupération.

En cas d'intempérie marine importante, cette cage peut être immergée très rapidement par modification du ballast. Cette opération peut être automatisée

- soit par l'emploi de brins autocassants calibrés à cet effet, frappés sur les flotteurs 8 de la cage,

- soit par l'emploi de flotteurs 8 automatiquement gonflés ou dégonflés depuis la terre ferme.

La cage selon l'invention peut être utilisée dans tous les cas d'élevage d'animaux aquatiques spécialement dans le cas des poissons marins élevés dans des lagunes, des lagons, des bras de mer ou la mer ouverte.

En outre la cage peut être doublée à l'extérieur par une enceinte 11 de protection en filet ou grillage ou en tout autre matériau protecteur dont la structure est une série d'anneaux 12a, 12b. Ces anneaux 12a, 12b sont en nombre égal à celui des anneaux 2a et 2b; ils sont disposés dans le même plan qu'eux et concentriques à eux. Les anneaux 12a, 12b sont reliés entre eux par des cordages 16, les anneaux extrêmes 12a étant reliés aux embouts 5 situés aux extrémités du mât 1 par des cordages 17.

Les anneaux 2a, 2b, 12a, 12b de cette structure de cage et le mât central 1 peuvent être réalisés avantageusement en matériaux composites, par exemple des tuyaux de chlorure de polyvinyle fretté par du polyester armé de laine de verre, des tuyaux métalliques protégés de la corrosion, des tuyaux de polyéthylène armé par une structure interne de métal, etc.

Dans la structure de la cage, les volumes coniques engendrés aux extrémités par la liaison par cordage peuvent présenter des angles au sommet variables en fonction des types de cages . Ceci permet notamment d'obtenir une très bonne pénétration au courant aquatique dans certains types de cette famille de cage, l'angle au sommet du cône étant faible.

On a représenté en 13 le filet de contention des animaux, en 14 le point d'amarrage de ce filet de contention et en 15 le point de rassemblement des poissons à l'occasion de l'opération de pêche.

Comme il va de soi et comme il résulte d'ailleurs déjà de ce qui précède, l'invention ne se limite nullement à ceux de ses modes d'application et de réalisation qui ont été plus spécialement envisagés; elle en embrasse, au contraire, toutes les variantes.

En ce qui concerne les différents "cordages" mentionnés ci-dessus, ceux-ci peuvent être réalisés en toute matière convenable (cordes, câbles, fils etc.).

## REVENDICATIONS

1. Cage pour l'élevage ou le stockage d'animaux aquatiques comportant une structure définissant le volume de la cage dans l'espace aquatique et un filet ou grillage habillant la structure, caractérisée en ce que ladite structure est constituée par un mât central rigide (1) sur lequel est enfilée et centrée une série d'anneaux (2a, 2b) reliés entre eux par des cordages (3).

2. Cage selon la revendication 1, caractérisée en ce qu'elle comporte un lest ponctuel (7) à sa périphérie.

3. Cage selon la revendication 1, caractérisée en ce qu'elle comporte des flotteurs (8) pouvant être plus ou moins gonflés.

4. Cage selon l'une quelconque des revendications précédentes, caractérisée en ce qu'elle comporte un panneau de filet ou grillage (9) de pêche tendu suivant un plan radial, la liaison de ce panneau à la surface de la cage étant faite suivant une ligne brisée à un endroit.

5. Cage selon l'une quelconque des revendications précédentes, caractérisée en ce qu'elle est doublée à l'extérieur par une enceinte de protection en filet ou grillage dont la structure est une série d'anneaux (12a, 12b) légèrement plus grands que les anneaux cités en premier lieu (2a, 2b), mais en nombre égal à ceux-ci et situés dans le même plan qu'eux et concentriques à eux, les anneaux extérieurs (12a, 12b) étant reliés entre eux par des cordages (16) et les anneaux extérieurs extrêmes (12a) étant reliés aux embouts (5) du mât (1) par des cordages (17).

6. Cage selon l'une quelconque des revendications précédentes, caractérisée en ce que les anneaux et le mât central (1) sont constitués en matériaux tubulaires composites.

# Fig.1.

Fig. 2.

Fig.3.

Fig.4.

# RAPPORT DE RECHERCHE EUROPEENNE

Office européen des brevets

**0060792**

Numéro de la demande

EP 82 40 0483

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | FR - A - 2 420 920 (ARIN) <br><br> * figures 1,2,4,5; page 2, ligne 5 - page 3, ligne 6; page 4, ligne 14 - page 5, ligne 19 * <br><br> -- | 1-3,6 | A 01 K 61/00 |
| A | FR - A - 2 436 560 (S.A.R.L.) <br><br> * figures 7,8,10-12; page 5, ligne 12 - page 6, ligne 3 * <br><br> -- | 4 | |
| A | US - A - 3 698 359 (FREMONT) <br><br> * figures 1,3; colonne 2, ligne 66 - colonne 3, ligne 35 * <br><br> -- | 5 | |
| A | US - A - 3 717 124 (JACOBS) <br><br> * figures 1-4; colonne 3, ligne 26 - colonne 4, ligne 3 * <br><br> ------ | 6 | DOMAINES TECHNIQUES RECHERCHES (Int. Cl. ³) <br><br> A 01 K |

Le présent rapport de recherche a été établi pour toutes les revendications

| Lieu de la recherche | Date d'achèvement de la recherche | Examinateur |
|---|---|---|
| La Haye | 08-06-1982 | VILBIG |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant